# EUROPÄISCHE PATENTANMELDUNG

(11) **EP 0 715 888 A2**
(43) Veröffentlichungstag der Anmeldung: **12.06.1996**
(21) Anmeldenummer: 95118790.5
(22) Anmeldetag: 29.11.1995
(51) Int. Cl.: B01J 21/06, B01J 37/02

(54) **Katalysator zur Durchführung lewissäurekatalysierter Reaktionen**

(30) Priorität: 07.12.1994 DE 4443529
(71) Anmelder: BASF AKTIENGESELLSCHAFT, D-67056 Ludwigshafen (DE)
(72) Erfinder: Gehrer, Eugen, Dr., D-67069 Ludwigshafen (DE); Marosi, Laszlo, Dr., D-67063 Ludwigshafen (DE)

(57) **Zusammenfassung**

Katalysatorsystem zur Durchführung lewissäurekatalysierter Reaktionen, indem der Katalysator ZrO₂ in teilweise tetragonaler Phase und mindestens einen zwei- oder dreiwertigen Promotor enthält.

## Beschreibung

Die vorliegende Erfindung betrifft Katalysatoren, die ZrO₂ in teilweise tetragonaler Phase und mindestens einen zwei- oder dreiwertigen Promotor enthalten, zur Durchführung lewissäurekatalysierter Reaktionen.

Feste lewissaure, Supersäuren auf der Basis von sulfatisiertem ZrO₂, im folgenden als ZrO₂-SO₄ bezeichnet, wurden erstmals in J. Chem. Soc., Chem. Commun., (18), 851 bis 852 beschrieben. Katalysatoren dieses Typs werden durch Imprägnieren von frisch gefälltem und getrockneten Zr(OH)₄-Gel mit z.B. 1 N Schwefelsäure und anschließender Calcinierung bei 500 bis 650°C hergestellt. Sie besitzen lewissaure Zentren mit einem Hammettwert von < - 16 und eignen sich aus diesem Grund für die Katalyse von Reaktionen die klassischerweise mit AlCl₃ oder anderen homogenen Lewissäuren durchgeführt werden. Sie werden üblicherweise in der Literatur als "sulfated zirconia" bezeichnet.

Neben dem System ZrO₂-SO₄ ist z.B. aus J. Chem. Soc. Chem. Comm., (1988), (18), 1259 bis 1260 das System ZrO₂-WO₃ und aus Chem. Lett. (1989), (6), 971 bis 972 das System ZrO₂-MoO₃ bekannt.

Alle diese Metalloxid-Akzeptorsysteme haben den Nachteil, daß die Akzeptoren (Sulfat, Molybdat, Wolframat) unter Reaktionsbedingungen durch die organischen Reaktionspartner oder durch im System vorhandenen Wasserstoff reduziert werden können. So wird z.B. das Sulfat durch Wasserstoff zum SO₂ reduziert. Das SO₂ wird ausgetragen, wodurch der Katalysator seine Aktivität verliert.

Die Stabilisierung der tetragonalen ZrO₂-Phase durch den Zusatz von anderen zwei- und dreiwertigen Elementen ist für Keramiken aus J. Am. Chem. Ceram. Soc., 74, (19..) Seite 1811 bis 1820 bekannt. Die tetragonale Phase wird dort vor allem wegen der mechanischen Eigenschaften geschätzt.

Der vorliegenden Erfindung lag daher die Aufgabe zugrunde, den zuvor genannten Nachteilen abzuhelfen.

Demgemäß wurde ein neues und verbessertes Katalysatorsystem zur Durchführung lewissäurekatalysierter Reaktionen gefunden, welches dadurch gekennzeichnet ist, daß der Katalysator ZrO₂ in teilweise tetragonaler Phase und mindestens einen zwei- oder dreiwertigen Promotor enthält.

Die Herstellung der erfindungsgemäßen Katalysatoren erfolgt in der Regel so, daß man im ersten Schritt eine wässerige Lösung einer Zirkonium(IV)-Verbindung und eines Salzes eines zwei- oder dreiwertigen Kations, im folgenden Promotor genannt, durch Zugabe einer Base als gemischtes, amorphes Gel ausfällt.

Die Zirkonium(IV)-Verbindung kann dabei ein Salz wie z.B. ZrOCl₂ oder ZrOSO₄ sein oder ein Zirkoniumhalogenid wie z.B. ZrCl₄ oder ein Alkoxid wie z.B. Zr(OCH₃)₄ sein. Man kann diese Zirkoniumlösung natürlich auch in situ durch Lösen einer säurelöslichen Zr-Verbindung wie z.B. Zr₂(CO₃) (OH)₂O₂ erzeugen.

Als Promotoren kann man ein bis fünf, bevorzugt ein bis drei, besonders bevorzugt ein zwei- oder dreiwertige Elemente der Gruppen IIA, IIIA, IIB, IIIB des Periodensystems, sowie Elemente der Übergangsmetalle und Lanthaniden einsetzen. Besonders bevorzugt werden Y³⁺, Sc³⁺, Yb³⁺, Fe³⁺, Zn²⁺ und Ca²⁺.

Das Molverhältnis von Promotorelement zum Zirkon beträgt 0,005:1 bis 0,1:1, bevorzugt 0,01:1 bis 0,08:1, besonders bevorzugt 0,02:1 bis 0,05:1.

Die Promotoren werden bevorzugt in Form von löslichen Salzen der Zr-Lösung zugesetzt. Alternativ dazu kann man auch ein frisch gefälltes (= nicht über 200°C calciniertes) ZrO(OH)₂-Gel oder ein ZrOₓ(OH)_{y} mit einer Lösung des Promotors imprägnieren.

Die Fällung des Promotor/ZrO₂-Gels kann bei einem pH-Wert von 5 bis 14, besonders bevorzugt bei pH = 9 erfolgen.

Nach der Fällung wird das Gel abfiltriert, getrocknet (bevorzugt bei 105 bis 120°C) und calciniert.

Die Calcinierung wird im Bereich von 500 bis 1200°C, bevorzugt bei 600 bis 900°C, besonders bevorzugt bei 700 bis 800°C durchgeführt. Die Calcinierungsdauer wird so eingestellt, daß sich die tetragonale ZrO₂-Phase ausbildet. Bei zu tiefer Temperatur und zu geringer Dauer entsteht katalytisch inaktives kubisches ZrO₂, bei zu hoher Temperatur und zu langer Calcinierdauer entsteht das thermodynamisch stabile monokline ZrO₂, welches ebenfalls katalytisch inaktiv ist. Die Calcinierdauer beträgt 1 bis 20 h, bevorzugt 2 bis 5 h, besonders bevorzugt 3 h.

Die so erhaltenen Katalysatoren können entweder direkt als Pulver oder nach der Verformung zu Tabletten oder Strängen, gemäß den allgemein üblichen Verformungstechniken, eingesetzt werden. Sie eignen sich für Friedel-Crafts-Acylierungen, Alkylierungen, Polymerisationsreaktionen, Isomerisierungen und als Träger für Edelmetalle, insbesondere für Hydrierreaktionen.

Die erfindungsgemäßen Katalysatoren enthalten im wesentlichen kein Sulfat, Molybdat und/oder Wolframat, d.h. Sulfat, Molybdat und/oder Wolframat sind maximal in Spuren vorhanden, bevorzugt sind die erfindungsgemäßen Katalysatoren frei von Sulfat, Molybdat und/oder Wolframat.

Durch den erfindungsgemäßen Zusatz von zwei- und dreiwertige Promotoren, die beim Calcinieren die tetragonale Phase des ZrO₂ stabilisieren können, erhält man hochaktive Katalysatoren. Ein z.B. bei 800°C calciniertes Mischoxid aus 2 mol-% Y und 98 mol-% Zr liefert ein überwiegend tetragonales ZrO₂, das eine mit ZrO₂-SO₄ vergleichbare katalytische Aktivität besitzt, jedoch im Gegensatz zu diesem aufgrund der chemischen Zusammensetzung Y₂O₃/ZrO₂ weder durch Wasserstoff noch durch organische Komponenten unter den üblichen Reaktionsbedingungen reduziert werden kann. Dies ist insbesondere dann wichtig, wenn man die Reaktion zur Unterdrückung der Verkokungsprodukte in Anwesenheit von Wasserstoff und Edelmetallen (als feine Partikel auf dem ZrO₂ verteilt) fährt.

### Beispiele

### Beispiele 1 und 2: Einfluß der Calciniertemperatur

50 g ZrOCl * 2.8 H₂O (= 0.155 mol) und 1.19 g Y(NO₃) * 3.6 H₂O (= 2 mol-%) werden in 500 ml Wasser gelöst und mit ca. 36 ml 25 %-iger NH₃-Lösung gefällt, wobei die NH3-Zugabe beim Erreichen eines pH's von 9 beendet wird. Der Niederschlag wird 2 h bei Raumtemperatur gerührt, anschließend abfiltriert und mit destilliertem Wasser Cl-frei gewaschen. Das Produkt wird über Nacht bei 110°C getrocknet. Ausbeute 22 g.

Je 11 g wurden 3 h bei 600°C (1) bzw. 3 h bei 800°C (2) calciniert.

Zur Bestimmung der katalytischen Aktivität wurde je 1 g Katalysator zusammen mit 2 g Benzoylchlorid und 8 g Benzol in einem 50 ml Glasdruckautoklaven bei 180°C, 16 h lang umgesetzt. Die organische Phase wurde vom Katalysator abfiltriert und die Benzophenon-Ausbeute mittels GC bestimmt (Massenprozentanalytik mit Ethylbenzol als internan Standard).
- XRD-Kommentare:: k = kubische Phase
t = tetragonale Phase
m = monokline Phase

| Beispiel | Katalysator | Calciniertemperatur | Oberfläche | XRD | Ausbeute |
|---|---|---|---|---|---|
| 1 | 2 % Y/ZrO₂ | 600°C | 56,6 m²/g | k,t | 7,2 % |
| 2 | 2 % Y/ZrO₂ | 800°C | 18,9 m²/g | t | 89,7 % |

### Beispiel 3 bis 5: pH-Wert der Fällung

Je 50 g ZrOCl * 2,8 H₂O (= 0,155 mol) und 1,74 g Y(NO3) * 3,6 H₂O (= 3 mol-%) wurden in 500 ml Wasser gelöst und mit ca. 36 ml 25 %- iger NH₃-Lösung gefällt, wobei beim ersten Versuch ein pH von 8, beim zweiten von 9 und beim dritten von 10 eingestellt wurde. Der Niederschlag wurde 2 h bei Raumtemperatur gerührt und anschließend abfiltriert und mit destilliertem Wasser Cl-frei gewaschen. Das Produkt wurde über Nacht bei 110°C getrocknet. Ausbeute ca. 22 g. In der Folge wurden die Produkte bei 600°C drei Stunden calciniert.

Die Bestimmung der katalytischen Aktivität erfolgte analog zum Beispiel 1.

| Beispiel | Katalysator | pH-Wert | Oberfläche | XRD | Ausbeute |
|---|---|---|---|---|---|
| 3 | 3 % Y/ZrO₂ | 8 | 47,6 m²/g | k,t | 0,8 % |
| 4 | 3 % Y/ZrO₂ | 9 | 48,2 m²/g | k,t | 17,1 % |
| 5 | 3 % Y/ZrO₂ | 10 | 46,5 m²/g | k,t | 0 % |

### Beispiel 6 bis 10: Einfluß der Y-Konzentration

Je 50 g ZrOCl * 2,8 H₂O (= 0,155 mol) und 1, 2, 3, 4 und 10 mol-% Y(NO3) * 3,6 H₂O wurden in 500 ml Wasser gelöst und mit ca. 36 ml 25 %-iger NH₃-Lösung gefällt, so daß zum Ende der NH₃-Zugabe ein pH von 9 erreicht wurde. Der Niederschlag wurde 2 h bei Raumtemperatur gerührt und anschließend abfiltriert und mit destilliertem Wasser Cl-frei gewaschen. Das Produkt wurde über Nacht bei 110°C getrocknet. In der Folge wurden die Produkte bei 800°C drei Stunden calciniert.

Die Bestimmung der katalytischen Aktivität erfolgte analog zum Beispiel 1.

| Beispiel | Katalysator | Y-Menge | Oberfläche | XRD | Ausbeute |
|---|---|---|---|---|---|
| 6 | Y/ZrO₂ | 1 % | 14,6 m²/g | t,m | 44,1 % |
| 7 | Y/ZrO₂ | 2 % | 18,9 m²/g | t | 89,7 % |
| 8 | Y/ZrO₂ | 3 % | 18,3 m²/g | t | 35,3 % |
| 9 | Y/ZrO₂ | 4 % | 18,6 m²/g | t | 13,4 % |
| 10 | Y/ZrO₂ | 10 % | 19,1 m²/g | t | 6,4 % |

### Beispiel 11 bis 32

Analog zum Beispiel 1 wurden im folgenden Katalysatoren mit je 3 mol-% eines dreiwertigen Promotors präpariert und bei 600 und 800°C calciniert.

| Beispiel | Promotor | Temperatur | Oberfläche | XRD | Ausbeute |
|---|---|---|---|---|---|
| 11 | 1,74 g Al(NO₃)₃*9 H₂O | 600°C | 55,9 m²/g | k | 3,6 % |
| 12 | 1,74 g Al(NO₃)₃*9 H₂O | 800°C | 16,2 m²/g | k,m | 1,5 % |
| 13 | 0,29 g H₃BO₃ | 600°C | 50,9 m²/g | k | 0,6 % |
| 14 | 0,29 g H₃BO₃ | 800°C | 8,1 m²/g | k,m | 0,7 % |
| 15 | 2,26 g Bi(NO₃)₃*5 H₂O | 600°C | 37,8 m²/g | m,k | 0 % |
| 16 | 2,26 g Bi(NO₃)₃*5 H₂O | 800°C | 9,1 m²/g | m | 2,7 % |
| 17 | 1,86 g Cr(NO₃)₃*9 H₂O | 600°C | 61,3 m²/g | k | 2,3 % |
| 18 | 1,86 g Cr(NO₃)₃*9 H₂O | 800°C | 21,7 m²/g | m,k | 0 % |
| 19 | 1,88 g Fe(NO₃)₃*9 H₂O | 600°C | 64,0 m²/g | k,t | 9,8 % |
| 20 | 1,88 g Fe(NO₃)₃*9 H₂O | 800°C | 13,4 m²/g | m,t | 100 % |
| 21 | 1,19 g Ga(NO₃)₃*x H₂O | 600°C | 52,0 m²/g | k | 0 % |
| 22 | 1,19 g Ga(NO₃)₃*x H₂O | 800°C | 15,3 m²/g | m,k | 8,9 % |
| 23 | 2,01 g La(NO₃)₃*6 H₂O | 600°C | 48,7 m²/g | k | 0,6 % |
| 24 | 2,01 g La(NO₃)₃*6 H₂O | 800°C | 23,9 m²/g | k,m | 0 % |
| 25 | 4,81 g Rh(NO₃)₃-Lsg | 600°C | 38,8 m²/g | k | 0 % |
| 26 | 4,81 g Rh(NO₃)₃-Lsg | 800°C | 16,0 m²/g | k | 0 % |
| 27 | 1,44 g Ru(NO₃)₃*x H₂O | 600°C | 39,6 m²/g | k,t | 4,8 % |
| 28 | 1,44 g Ru(NO₃)₃*x H₂O | 800°C | 20,1 m²/g | m,k | 4,2 % |
| 29 | 1,07 g Sc(NO₃)₃*x H₂O | 600°C | m²/g | | 23,8 % |
| 30 | 1,07 g Sc(NO₃)₃*x H₂O | 800°C | m²/g | | 18,7 % |
| 31 | 1,67 g Yb(NO₃)₃* H₂O | 600°C | 33,0 m²/g | k | 0 % |
| 32 | 1,67 g Yb(NO₃)₃* H₂O | 800°C | 13,3 m²/g | t | 46,5 % |

### Beispiel 33 bis 39

Analog zu den Beispielen 11 bis 32 wurden im folgenden Katalysatoren mit je 3 mol-% eines zweiwertigen Promotors präpariert und bei 600 und 800°C calciniert.

| Beispiel | Promotor | Temperat ur | Oberfläche | XRD | Ausbeute |
|---|---|---|---|---|---|
| 34 | 1,10 g Ca(NO₃)₂*4 H₂O | 800°C | 19,3 m²/g | t | 8,3 % |
| 35 | 1,39 g Zn(NO₃)₂*8 H₂O | 600°C | 27,5 m²/g | t | 66,1 % |
| 36 | 1,39 g Zn(NO₃)₂*8 H₂O | 800°C | 4,3 m²/g | m,t | 37,7 % |
| 37 | 1,04 g Pd(Acetat)₂ | 600°C | 33,7 m²/g | k,m | 0 % |
| 38 | 1,04 g Pd(Acetat)₂ | 800°C | 9,5 m²/g | m,t | 4,2 % |

## Patentansprüche

1. Katalysator zur Durchführung lewissäurekatalysierter Reaktionen, dadurch gekennzeichnet, daß der Katalysator ZrO₂ in teilweise tetragonaler Phase und mindestens einen zwei- oder dreiwertigen Promotor enthält.

2. Katalysator zur Durchführung lewissäurekatalysierter Reaktionen nach Anspruch 1, dadurch gekennzeichnet, daß der Promotor ein Element aus der Gruppe IIIB, IIB, IIA, VIIIB des Periodensystems oder der Gruppe der Lanthaniden ist.

3. Katalysator zur Durchführung lewissäurekatalysierter Reaktionen nach Anspruch 1, dadurch gekennzeichnet, daß der Promotor Yttrium, Scandium, Ytterbium, Eisen, Calcium oder Zink ist.

4. Katalysator zur Durchführung lewissäurekatalysierter Reaktionen nach Anspruch 1, dadurch gekennzeichnet, daß man den Katalysator durch Fällung einer Zr(IV)-Salzlösung in Anwesenheit des Promotors mit einer Base und anschließender Calcinierung des Mischoxid-Gels herstellt.

5. Katalysator zur Durchführung lewissäurekatalysierter Reaktionen nach Anspruch 1, dadurch gekennzeichnet, daß den Katalysator durch Imprägnierung eines amorphen ZrO(OH)ₓ-Gels mit einer promotorhaltigen Lösung und anschließender Calcinierung herstellt.

6. Katalysator zur Durchführung lewissäurekatalysierter Reaktionen nach Anspruch 1, dadurch gekennzeichnet, daß man das ZrO₂-Promotor-Mischoxid bei Temperaturen von 500 bis 1200°C calciniert.

7. Katalysator zur Durchführung lewissäurekatalysierter Reaktionen nach Anspruch 1, dadurch gekennzeichnet, daß man bei Temperaturen von 600 bis 900°C calciniert.

8. Katalysator zur Durchführung lewissäurekatalysierter Reaktionen nach Anspruch 1, dadurch gekennzeichnet, daß man bei Temperaturen von 700 bis 800°C calciniert.
